# FASCICULE DE BREVET EUROPEEN

(11) **EP 3 922 886 B1**
(45) Date de publication et mention de la délivrance du brevet: **03.08.2022**
(21) Numéro de dépôt: 21178845.0
(22) Date de dépôt: 10.06.2021
(51) Int. Cl.: F16H 57/08, F16H 1/28

(54) **REDUCTEUR MECANIQUE DE TURBOMACHINE D'AERONEF**
MECHANISCHES REDUKTIONSGETRIEBE FÜR TURBOTRIEBWERK EINES LUFTFAHRZEUGS
MECHANICAL GEAR FOR AIRCRAFT TURBINE ENGINE

(30) Priorité: 11.06.2020 FR 2006099
(43) Date de publication de la demande: 15.12.2021
(73) Titulaire: Safran Transmission Systems, 92700 Colombes (FR)
(72) Inventeur: BECK, Guillaume Julien, 77550 MOISSY-CRAMAYEL (FR); MOULY, Guillaume Pierre, 77550 MOISSY-CRAMAYEL (FR); LEFEBVRE, Simon Loïc Clément, 77550 MOISSY-CRAMAYEL (FR); PIGOTT, Quentin Pierre Henri, 77550 MOISSY-CRAMAYEL (FR); SIMON, Adrien Louis, 77550 MOISSY-CRAMAYEL (FR)
(74) Mandataire: Gevers & Orès

(56) Documents cités:
- CN-A- 101 602 325
- US-A- 3 686 978
- US-A1- 2019 011 039
- US-A1- 2019 360 356

## Description

### Domaine technique de l'invention

La présente invention concerne le domaine des réducteurs mécaniques pour des turbomachines en particulier d'aéronef.

### Arrière-plan technique

L'état de l'art comprend notamment les documents WO-A1-2010/092263, FR-A1-2 987 416, FR-A1-3 008 462, FR-A1-3 008 463, FR-A1-3 041 054, US-A1-2019/360356 et US-A1-2019/11039.

Le rôle d'un réducteur mécanique est de modifier le rapport de vitesse et de couple entre l'axe d'entrée et l'axe de sortie d'un système mécanique.

Les nouvelles générations de turbomachines à flux multiples, notamment celles ayant un haut taux de dilution, comportent un réducteur mécanique pour entraîner l'arbre d'une hélice (aussi appelé « fan »), par exemple de soufflante. De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont des axes de révolution différents équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à flux multiple, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites. Les réducteurs peuvent être composés de un ou plusieurs étages d'engrènement. Cet engrènement est assuré de différentes façons comme par contact, par friction ou encore par champs magnétique. Il existe plusieurs types d'engrènement par contact comme avec des dentures droites, hélicoïdales ou en chevron.

L'augmentation des rapports de réduction des architectures des moteurs cibles pousse à utiliser des réducteurs dits « double étage ». En effet, au-delà d'un rapport de l'ordre de 6 ou 7, la technologie dite « simple étage » perd son intérêt car n'est plus assez compacte. Il faut alors utiliser des réducteurs dits « double étage ».

Dans une technologie simple étage, c'est la même denture d'un satellite qui coopère avec le solaire et la couronne. Dans une technologie double étage, la denture du satellite qui coopère avec le solaire est différente de la denture du satellite qui coopère avec la couronne. En général, les dentures d'un satellite qui coopèrent respectivement avec le solaire et la couronne ont des diamètres moyens différents.

La principale problématique des réducteurs double étage (chaque étage ou denture comportant une seule série de dents) réside dans le fait qu'ils sont asymétriques par rapport à un plan perpendiculaire à l'axe X. Ainsi, la puissance rentrant à l'aval par l'intérieur et ressortant à l'amont par l'extérieur génère des moments non négligeables au niveau des satellites (les expressions « amont » et « aval » faisant référence à l'écoulement général des gaz dans la turbomachine).

Une solution à ce problème consiste à prévoir un arrangement symétrique des deux dentures par rapport à un plan perpendiculaire à l'axe X (chaque étage ou denture comportant une double série de dents). Ces deux dentures sont à chevrons c'est-à-dire qu'elles comportent chacune une série de dents amont séparée axialement d'une série de dents aval. Les dents amont sont sensiblement parallèles entre elles et inclinées par rapport à l'axe X. Les dents aval sont également sensiblement parallèles entre elles et inclinées par rapport à l'axe X et par rapport aux dents amont de façon à ce que les dents amont et aval forment des chevrons tout autour du satellite. Dans une denture à chevrons, l'angle d'hélice des deux séries de dents a la même valeur (et une inclinaison opposée), de façon à ce que ces séries de dents génèrent des forces axiales opposées de même valeur.

Les satellites du réducteur doivent être supportés et guidés en rotation vis à vis du porte-satellites. Les solutions classiques pour ce faire sont d'utiliser des paliers. Plusieurs technologies sont envisageables telles que les paliers lisses, les paliers à roulement, etc. L'intégration de paliers à roulement n'est pas simple car les paliers doivent être disposés de manière symétrique autour de chaque satellite et de part et d'autre du plan précité, ce qui a tendance à augmenter l'encombrement du réducteur.

Cependant, l'environnement moteur dans lequel le réducteur doit s'intégrer est contraint. Ainsi, l'encombrement du réducteur, notamment axial, peut entrainer un allongement du moteur et donc une augmentation de la trainée et de la masse du moteur, ce qui diminue les performances de ce dernier. De même, la masse du réducteur influe négativement sur les performances du système.

L'invention a donc pour but d'apporter une solution simple, efficace et économique pour minimiser l'encombrement du réducteur et sa masse afin d'améliorer les performances globales du moteur équipé de ce réducteur.

### Résumé de l'invention

L'invention concerne un réducteur mécanique de turbomachine, en particulier d'aéronef, ce réducteur comportant :
- un solaire ayant un axe de rotation,
- une couronne qui s'étend autour du solaire,
- des satellites qui sont engrenés avec le solaire et la couronne et qui sont maintenus par un porte-satellites, chaque satellite ayant un axe de rotation et comportant une première denture de diamètre moyen pour l'engrènement avec le solaire, et une seconde denture de diamètre moyen, différent du diamètre moyen de la première denture, pour l'engrènement avec la couronne,
la seconde denture comportant une série de dents amont et une série de dents aval situées de part et d'autre dudit plan et séparées l'une de l'autre par ladite première denture,
chacun des satellites étant centré et guidé en rotation autour de son axe vis-à-vis du porte-satellites par des paliers à roulement situés de part et d'autre dudit plan,
caractérisé en ce que la première denture comporte une série de dents amont et une série de dents aval qui sont situées de part et d'autre d'un plan perpendiculaire à l'axe de rotation du solaire et passant sensiblement au milieu du satellite,
et en ce que lesdits paliers sont situés de part et d'autre dudit plan, un palier amont étant intercalé axialement entre la série de dents amont de la seconde denture et ledit plan, et un palier aval étant intercalé axialement entre la série de dents aval de la seconde denture et ledit plan.

Contrairement à l'art antérieur dans lequel les paliers sont situés aux extrémités axiales des satellites (et donc les première et seconde dentures sont intercalées axialement entre les paliers - autrement dit, chaque série de dents de la seconde denture est intercalée axialement entre un des paliers et le plan précité), l'invention propose au contraire de monter chacun des paliers de guidage d'un satellite entre une série de dents de sa seconde denture et le plan précité.

Cette configuration peut permettre de réduire fortement la dimension axiale du porte-satellites ainsi que l'encombrement axial du réducteur. C'est encore plus vrai lorsque les paliers sont du type à roulement en particulier car l'épaisseur axiale du roulement se superpose à l'épaisseur axiale des dentures du premier étage.

Le réducteur selon l'invention peut comprendre une ou plusieurs des caractéristiques suivantes, prises isolément les unes des autres, ou en combinaison les unes avec les autres :
- chacun des satellites comprend un corps cylindrique et une paroi annulaire entourant à distance ce corps et reliée à ce dernier par un voile annulaire de matière s'étendant dans le plan précité, les séries de dents de la seconde denture étant situées sur des portions d'extrémité dudit corps et les séries de dents de la première denture étant situées sur la paroi, cette paroi définissant, de part et d'autre du voile et dudit plan, des espaces annulaires dans lesquels sont au moins partiellement logés les paliers amont et aval ;
- le porte-satellites comprend deux rebords cylindriques, respectivement amont et aval, situés de part et d'autre dudit plan, ces rebords cylindriques étant logés dans lesdits espaces annulaires et servant de support auxdits paliers amont et aval ;
- lesdits paliers amont et aval sont des paliers à roulement ; l'utilisation de paliers à roulement est avantageuse car elle apporte un gain en encombrement ;
- chacun des paliers à roulement amont et aval comprend une bague ou une piste de roulement interne qui est :
   - rapportée sur le satellite, ou
   - formée d'une seule pièce avec le satellite, ou
   - rapportée sur le porte-satellites, ou
   - formée d'une seule pièce avec le porte-satellites ;
- chacun des paliers à roulement amont et aval comprend une bague ou une piste de roulement externe qui est :
   - rapportée sur le satellite, ou
   - formée d'une seule pièce avec le satellite, ou
   - rapportée sur le porte-satellites, ou
   - formée d'une seule pièce avec le porte-satellites ;
- la bague ou la piste de roulement externe de chacun des paliers est rapportée ou formée d'une seule pièce avec ladite paroi cylindrique ;
- les paliers amont et aval ont des diamètres identiques qui sont inférieurs au diamètre de la première denture et supérieurs au diamètre de la second denture ;
- le porte-satellites a une dimension axiale qui représente entre 20 et 80% de la dimension axiale des satellites ;
- la première denture est à dents en chevron et la seconde denture est à dents en chevron ou à dents droites ; des dents droites sont des dents parallèles entre elles et à l'axe de rotation du satellite ;
- le réducteur est inscrit dans une enveloppe ayant une forme générale biconique, le réducteur présentant une plus grande dimension transversale au niveau dudit plan ; l'angle formé par les deux tronçons coniques de cette forme est de préférence inférieur ou égal à 150° ;
- la série de dents amont et la série de dents aval de la première denture sont séparées l'une de l'autre par une rainure annulaire située dans un plan. Dans la présente demande, on entend par une denture à dents en chevron, une denture comportant deux séries de dents orientées dans des directions différentes. Les dents de la première série sont inclinées par rapport à l'axe autour duquel s'étend cette première série, et les dents de la seconde série sont inclinées différemment par rapport à son axe. Les dents des deux séries sont ainsi inclinées les unes par rapport aux autres pour former des chevrons. L'angle d'hélice des deux séries de dents a la même valeur et une inclinaison opposée.

L'invention concerne en outre une turbomachine, en particulier d'aéronef, comportant un réducteur mécanique tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine utilisant l'invention,
[Fig.2] la figure 2 est une vue partielle en coupe axiale d'un réducteur mécanique à simple étage d'engrènement, et illustre la technique antérieure à la présente invention,
[Fig.3] la figure 3 est une vue partielle en coupe axiale et en perspective d'un réducteur mécanique à double étage d'engrènement, et illustre la technique antérieure à la présente invention,
[Fig.4] la figure 4 est une autre vue schématique en coupe axiale du réducteur de la figure 3,
[Fig.5] la figure 5 est une vue partielle en coupe axiale d'un réducteur mécanique à double étage d'engrènement, et illustre également la technique antérieure à la présente invention,
[Fig.6] la figure 6 est une vue partielle en perspective du réducteur de la figure 5,
[Fig.7] la figure 7 est une vue à plus partielle en coupe axiale d'un réducteur mécanique à double étage d'engrènement, et illustre un premier mode de réalisation de l'invention,
[Fig.8] la figure 8 est une vue à plus partielle en coupe axiale d'un réducteur mécanique à double étage d'engrènement, et illustre un second mode de réalisation de l'invention,
[Fig.9] la figure 9 est une vue à plus partielle en coupe axiale d'un réducteur mécanique à double étage d'engrènement, et illustre un troisième mode de réalisation de l'invention, et
[Fig.10] la figure 10 est une vue partielle en perspective du réducteur de la figure 9.

### Description détaillée de l'invention

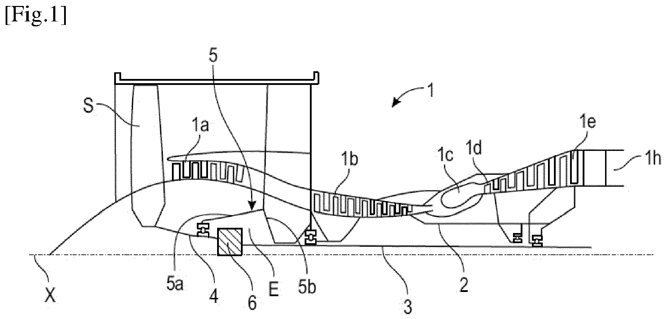

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé par l'arbre BP 3 au moyen d'un réducteur 6. Ce réducteur 6 est généralement de type planétaire ou épicycloïdal.

La description qui suit concerne un réducteur du type épicycloïdal, dont le porte-satellites et le solaire sont mobiles en rotation, la couronne du réducteur étant fixe dans le repère du moteur.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

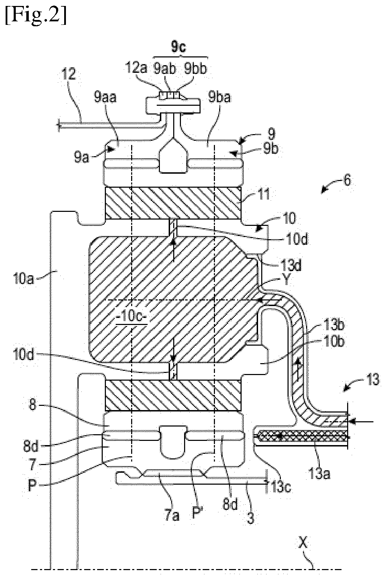

La figure 2 montre un réducteur épicycloïdal 6. En entrée, le réducteur 6 est relié à l'arbre BP 3, par exemple par l'intermédiaire de cannelures internes 7a. Ainsi, l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenu par un châssis appelé porte-satellites 10. Chaque satellite 8 tourne autour de son propre axe Y, et engrène avec la couronne 9.

En sortie nous avons :
▪ Dans cette configuration épicycloïdale, l'ensemble des satellites 8 entraine en rotation le porte-satellite 10 autour de l'axe X de la turbomachine.
La couronne est fixée au carter moteur ou stator 5 via un porte-couronne 12 et le porte-satellites 10 est fixé à l'arbre de soufflante 4.
▪ Dans une autre configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.
▪ Dans une autre configuration différentielle, l'ensemble des satellites 8 est maintenu par un porte-satellites 10 qui est relié à un premier arbre de soufflante 5. Chaque satellite entraine la couronne qui est rapportée à un second arbre de soufflante contrarotatif 4 via un porte-couronne 12.

Chaque satellite 8 est monté libre en rotation à l'aide d'un palier 11, par exemple de type roulement ou palier hydrodynamique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange, les axes 10b et le châssis 10a peuvent être séparés en plusieurs pièces.

Pour les mêmes raisons citées précédemment, la denture d'un satellite peut être séparée en plusieurs hélices ou dents présentant chacun un plan médian P, P'. Dans notre exemple, nous détaillons le fonctionnement d'un réducteur dont chaque satellite comprend deux séries de dents en chevron coopérant avec une couronne séparée en deux demi-couronnes:
▪ Une demi-couronne amont 9a constituée d'une jante 9aa et d'une demi-bride de fixation 9ab. Sur la jante 9aa se trouve l'hélice avant engrenée avec une hélice de la denture 8d de chaque satellite 8. L'hélice de la denture 8d engrène également avec celle du solaire 7.
▪ Une demi-couronne aval 9b constituée d'une jante 9ba et d'une demi-bride de fixation 9bb. Sur la jante 9ba se trouve l'hélice arrière engrenée avec une hélice de la denture 8d de chaque satellite 8. L'hélice de la denture 8d engrène également avec celle du solaire 7.

Si les largeurs d'hélice varient entre le solaire 7, les satellites 8 et la couronne 9 à cause des recouvrements de denture, elles sont toutes centrées sur un plan médian P pour les dents amont et sur un autre plan médian P' pour les dents aval.

La figure 2 illustre ainsi le cas d'un réducteur à simple étage d'engrènement, c'est-à-dire qu'une même denture 8d de chaque satellite 8 coopère à la fois avec le solaire 7 et la couronne 9. Même si la denture 8d comprend deux séries de dents, ces dents ont le même diamètre moyen et forment une seule et même denture appelée chevron.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur 13 comprend des injecteurs 13a et des bras 13b. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

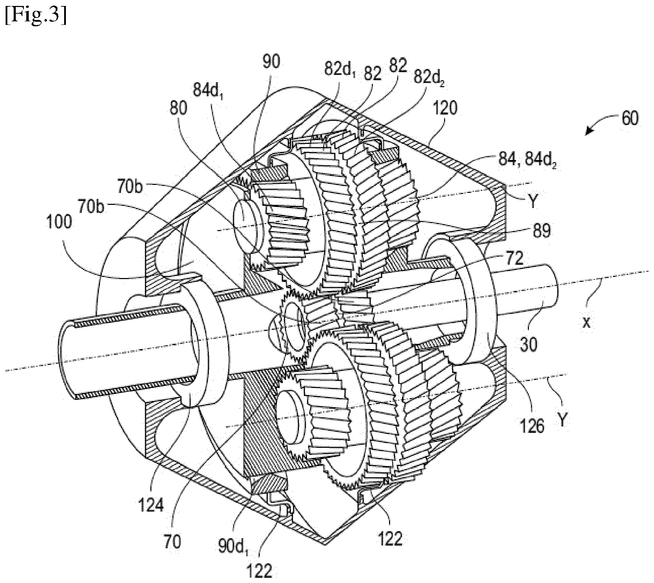

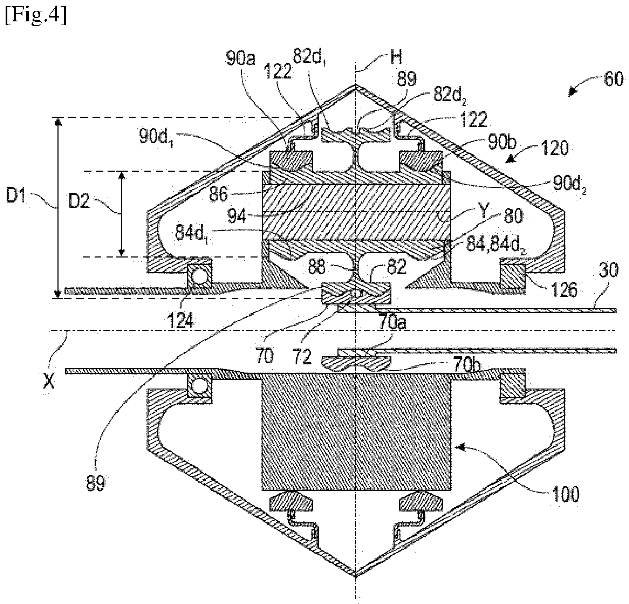

Les figures 3 et 4 montrent un autre exemple d'architecture de réducteur, dit à double étage d'engrènement, qui comprend :
- un solaire 70 ayant un axe de rotation X,
- une couronne 90 qui s'étend autour du solaire et qui est configurée pour être immobile en rotation autour de l'axe X, et
- des satellites 80 qui sont engrenés avec le solaire 70 et la couronne 90 et qui sont maintenus par un porte-satellites 100 qui est configuré pour être mobile en rotation autour de l'axe X.

On définit le plan H comme étant un plan médian perpendiculaire à l'axe X et passant sensiblement au milieu du réducteur 60 (figure 4).

Le solaire 70 comprend des cannelures internes 70a d'accouplement avec l'arbre BP 30 ainsi qu'une denture externe 70b d'engrènement avec les satellites 80. La denture 70b présente deux séries de dents adjacentes en chevron, séparées l'une de l'autre par une rainure annulaire 72 orientée radialement vers l'extérieur. La denture 70b est symétrique par rapport au plan H, ses dents étant situées de part et d'autre du plan H qui passe par la rainure 72.

La couronne 90 est formée par deux anneaux indépendants 90a, 90b et comprend une denture qui est séparée en deux séries de dents 90d1, 90d2 en chevron portées respectivement par les deux anneaux.

Les anneaux 90a, 90b sont disposés de manière symétrique par rapport au plan H qui s'étend donc entre ces anneaux. Les anneaux sont reliés et fixés à un porte-couronne 120 par l'intermédiaire de flasques annulaires 122 de liaison. Les flasques 122 sont indépendants l'un de l'autre, chaque flasque ayant en demi section axiale une forme générale en S lui procurant une certaine souplesse radiale par déformation élastique en fonctionnement. Chaque anneau 90a, 90b s'étend autour de l'axe X et est fixé au flasque 122 correspondant par sa périphérie externe. Sa périphérie interne comprend une des dents 90d1, 90d2.

Le porte couronne 120 a une forme générale annulaire autour de l'axe X et plus particulièrement biconique. Il comprend ainsi un premier tronçon amont ou à gauche sur le dessin, avec une extrémité amont de plus petit diamètre, et une extrémité aval de plus grand diamètre qui est reliée à l'extrémité amont de plus grand diamètre de l'autre tronçon, aval ou à droite sur le dessin. Les extrémités de plus grand diamètre des tronçons sont donc reliées entre elles, et leurs extrémités de plus petits diamètres forment les extrémités axiales du porte-couronne.

L'extrémité amont du porte-couronne 120 s'étend autour du porte-satellites 100 ou d'un arbre relié à ce porte-satellites, et est centré et guidé en rotation sur le porte-satellite ou l'arbre par l'intermédiaire d'au moins un palier 124. De la même façon, l'extrémité aval du porte-couronne 120 s'étend autour du porte-satellites 100 ou d'un arbre relié à ce porte-satellites, et est centré et guidé en rotation sur le porte-satellite ou l'arbre par l'intermédiaire d'au moins un autre palier 126.

Comme c'est le cas de la couronne 90, le porte-couronne 120 présente une symétrie par rapport au plan H qui coupe le porte-couronne en son milieu et passe donc par les extrémités de plus grand diamètre des tronçons précités. Chaque satellite 80 comporte une première denture 82 de diamètre moyen D1 pour l'engrènement avec le solaire 70, et une seconde denture 84 de diamètre moyen D2, différent de D1 et en particulier inférieur à D1, pour l'engrènement avec la couronne 90. Les diamètres moyens sont mesurés depuis l'axe Y de chaque satellite et représente la moyenne entre le diamètre maximal et le diamètre minimal d'une denture de ce satellite.

Chaque satellite 80 comprend un corps cylindrique 86, ici tubulaire, et un voile annulaire 88 s'étendant sensiblement radialement vers l'extérieur depuis le milieu de ce corps 86. Le voile 88 relie le corps 86 à une paroi annulaire 91 qui entoure le corps 86. La denture 84 est séparée en deux séries de dents 84d1, 84d2 en chevron qui sont situées respectivement sur les extrémités axiales du corps 86. La denture 82 comprend deux séries de dents 82d1, 82d2 en chevron qui sont situées à la périphérie externe du voile 88 et en particulier de la paroi 91 et qui sont séparées l'une de l'autre par une rainure annulaire 89 débouchant radialement vers l'extérieur par rapport à l'axe Y.

La denture 82 est traversée en son milieu par le plan H qui passe par la rainure 89, les dents 82d1, 82d2 étant donc disposées de part et d'autre du plan H. Les dents 84d1, 84d2 sont également disposées de manière symétrique par rapport au plan H.

La denture 82 et la périphérie externe du voile 88 ont une dimension axiale qui est inférieure à la distance axiale entre les anneaux 90a, 90b, ainsi qu'entre les flasques 122, de façon à ce que chaque satellite 80 puisse librement tourner dans le porte-couronne 120 et entre les anneaux 90a, 90b et les flasques 122.

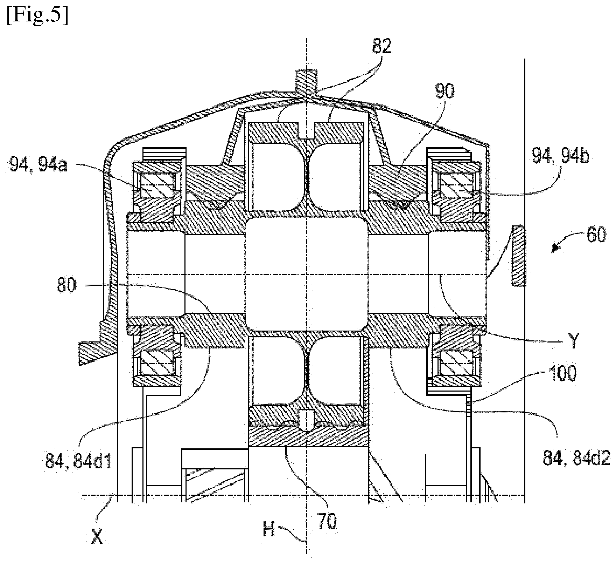

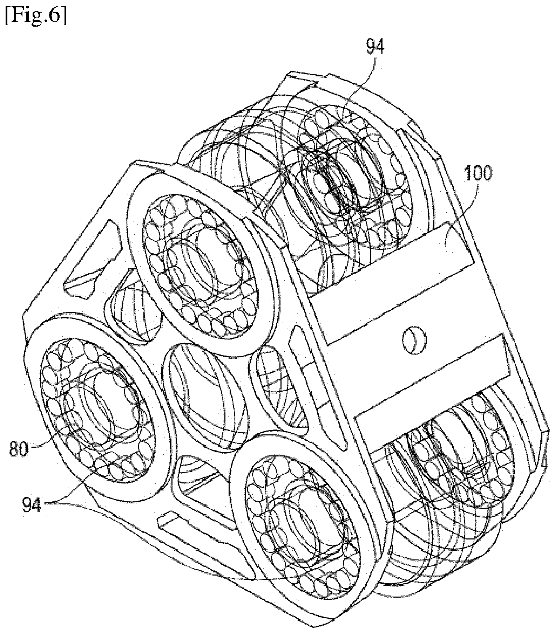

Dans ce type d'architecture, les satellites 80 sont centrés et guidés en rotation autour de leurs axes Y vis-à-vis du porte-satellites 100, par des paliers 94 qui peuvent être des paliers lisses comme c'est le cas aux figures 3 et 4 ou des paliers à roulement comme cela est représenté aux figures 5 et 6.

L'intégration de paliers 94 à roulement dans un réducteur 60 est complexe car elle a tendance à augmenter de manière significative l'encombrement axial et la masse du réducteur, ce qui a un impact négatif important sur les performances du moteur équipé de ce réducteur.

L'invention propose une solution d'intégration des paliers 94 à roulement qui permet de résoudre ces inconvénients.

L'invention propose à cet effet d'intercaler axialement un palier à roulement amont 94a entre les dents amont 84d1 de la seconde denture 84 et le plan H, et un palier à roulement aval 94b entre les dents aval 84d2 de la seconde denture 84 et le plan H.

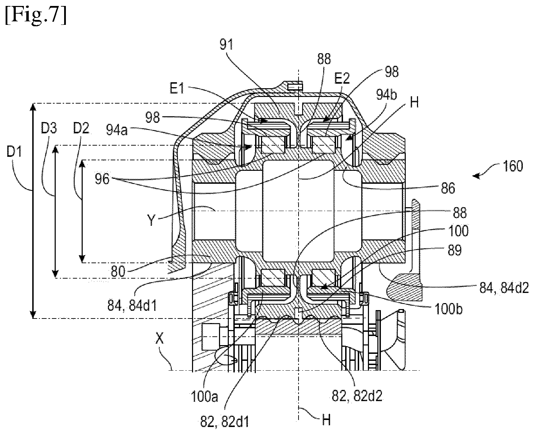

Les figures 7 à 9 décrivent trois modes de réalisation de l'invention.

Les éléments décrits dans ce qui précède en relation avec les figures 3 à 6 sont désignés par les mêmes références dans les figures 7 et suivantes. La description qui précède faite en relation avec les figures 3 à 6 s'applique donc aux modes de réalisation des figures 7 et suivantes dans la mesure où elle ne contredit pas ce qui suit ou n'est pas remplacée par ce qui suit. Dans chacun des modes de réalisation des figures 7 à 9, la paroi annulaire 91 de chaque satellite 80 définit, de part et d'autre du voile 88 et du plan H, et autour du corps 86 de ce satellite, des espaces annulaires E1, E2 dans lesquels sont au moins partiellement logés les paliers à roulement amont 94a et aval 94b.

On comprend que les paliers 94a, 94b sont au moins partiellement entourés par la première denture 82.

Dans les exemples illustrés dans les dessins, les paliers à roulement 94a, 94b sont à rouleaux et sont symétriques par rapport au plan H.

Les paliers à roulement 94a, 94b ont des diamètres D3 identiques et on comprend également que ces diamètres D3 sont inférieurs au diamètre D1 de la première denture 82 et supérieurs au diamètre D2 de la second denture 84 (cf. figure 7).

Dans chacun des modes de réalisation, le porte-satellites 100 comprend deux rebords cylindriques, respectivement amont 100a et aval 100b, situés de part et d'autre du plan H.

Ces rebords cylindriques 100a, 100b sont logés dans les espaces annulaires E1, E2 et servent de support aux paliers à roulement amont 94a et aval 94b, respectivement. On comprend que ces rebords 100a, 100b sont au moins partiellement entourés par la première denture 82.

Dans chacun des modes de réalisation, la première denture 82 est à dents en chevron et la seconde denture 84 est à dents en chevron.

Dans le premier mode de réalisation représenté à la figure 7, chacun des paliers à roulement 94a, 94b comprend une piste de roulement interne 96 qui est formée d'une seule pièce avec le satellite 80 et en particulier son corps 86. La piste 96 comprend une surface cylindrique externe de roulement délimitée axialement par deux surfaces annulaires sensiblement radiales. Chacun de ces paliers 94a, 94b comprend une bague ou une piste de roulement externe 98 qui est formée d'une seule pièce avec le porte-satellites 100 et en particulier avec l'un de ses rebords 100a, 100b. Cette piste 98 comprend une simple surface cylindrique interne, les rouleaux des paliers 94a, 94b étant ici calés et maintenus axialement par les surfaces radiales de la piste interne 96.

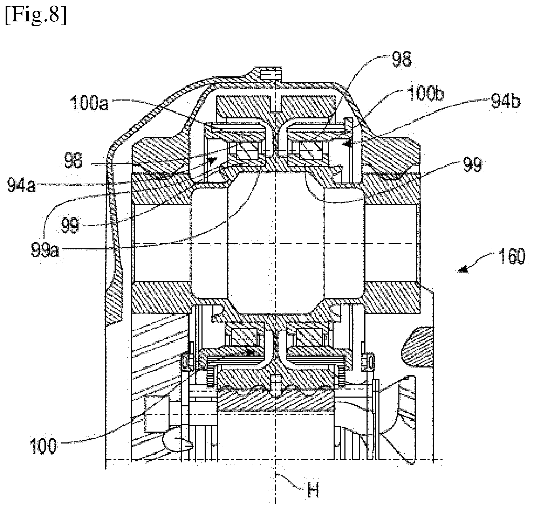

Dans le deuxième mode de réalisation représenté à la figure 8, chacun des paliers à roulement 94a, 94b comprend une bague de roulement interne 99 qui est rapportée et fixée (par exemple par frettage) sur le satellite 80 et en particulier son corps 86. Un écrou (non représenté) peut être vissé sur le corps 86 pour assurer l'immobilisation axiale de chaque bague 99 sur le corps 86.

Chacun de ces paliers 94a, 94b comprend une piste 98 de roulement externe qui est formée d'une seule pièce avec le porte-satellites 100, comme évoqué dans le précédent mode de réalisation. Les rouleaux de chaque palier 94a, 94b peuvent être calés et maintenus axialement par des rebords annulaires externes 99a de la bague interne 99.

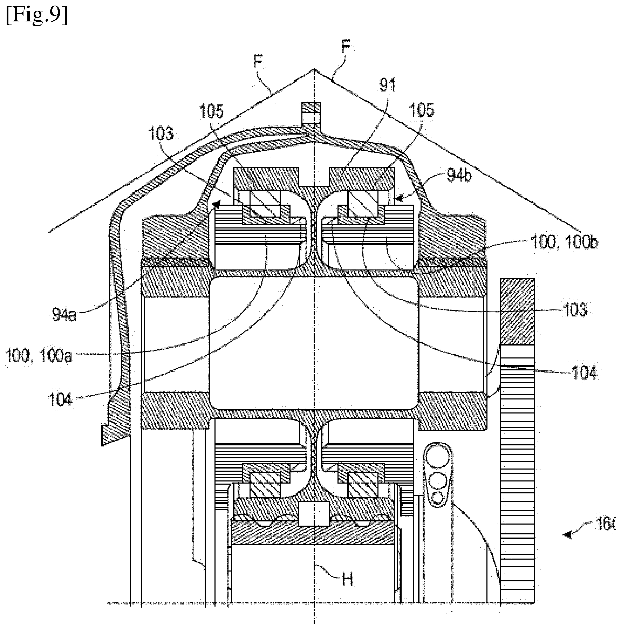

Dans le troisième mode de réalisation représenté à la figure 9, chacun des paliers à roulement 94a, 94b comprend une bague de roulement interne 103 qui est rapportée et fixée sur le porte-satellites 100 et en particulier sur son rebord 100a, 100b. Chaque bague 103 est par exemple montée par coulissement sur une surface cylindrique externe de ce rebord 100a, 100b et maintenue axialement contre un épaulement annulaire de ce rebord par un écrou 104 vissé sur le rebord.

Chacun de ces paliers 94a, 94b comprend une piste 105 de roulement externe qui est formée d'une seule pièce avec le satellite 80 et en particulier avec sa paroi 91. Cette piste 105 comprend une simple surface cylindrique interne, les rouleaux des paliers 94a, 94b étant ici calés et maintenus axialement par des rebords annulaires externes de la bague interne 103.

De nombreuses autres variantes de réalisation des paliers sont envisageables et ne sont pas toutes représentées, en particulier en ce qui concerne l'intégration ou le montage des paliers dans le réducteur.

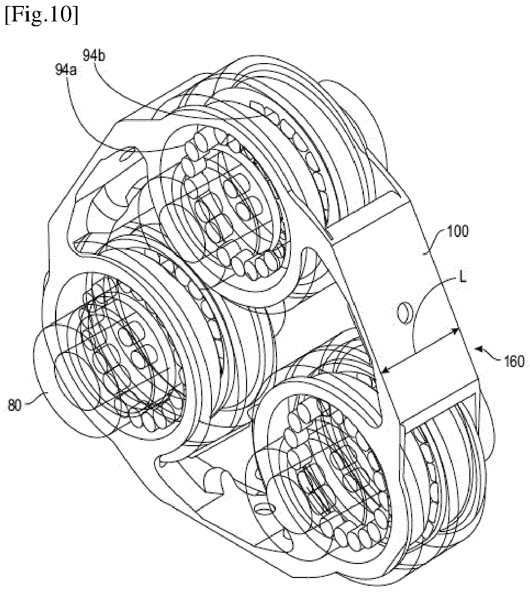

La figure 10 est une vue en perspective du réducteur 160 de la figure 9 et permet notamment de constater la dimension axiale L réduite du porte-satellites 100 par rapport à celui de la figure 6. Le porte-satellites 100 a par exemple une dimension axiale qui représente entre 20 et 80% de la dimension axiale des satellites 80.

La figure 9 permet quant à elle de constater que la disposition des paliers 94a, 94b selon l'invention permet d'accentuer la forme biconique F du réducteur 160 (par rapport à celui des figures 5 et 6), cette forme facilitant son intégration dans le moteur. Le réducteur 160 est ainsi inscrit dans une enveloppe ayant une forme générale biconique. Le réducteur 160 présente une plus grande dimension transversale au niveau du plan H. L'angle formé par les deux tronçons coniques de cette forme est de préférence inférieur ou égal à 150°.

Le réducteur 160 selon l'invention est notamment compatible :
- d'une utilisation « épicycloïdale » à porte-satellites tournant et couronne fixe ;
- d'une utilisation « planétaire » à couronne tournante et porte-satellites fixe
- d'une utilisation « différentiel » à couronne et porte-satellites tournants.
- de paliers à éléments roulants et également de paliers hydrodynamiques
- d'un porte-satellite monobloc ou en plusieurs parties.

Dans une variante non représentée, au moins une des dentures 82, 84, voire les deux dentures 82, 84, du réducteur 160 pourrai(en)t être droite(s) et non pas à dents en chevron.

## Revendications

1. Réducteur mécanique (160) de turbomachine (1), en particulier d'aéronef, ce réducteur comportant :
- un solaire (70) ayant un axe (X) de rotation,
- une couronne (90) qui s'étend autour du solaire (70),
- des satellites (80) qui sont engrenés avec le solaire (70) et la couronne (90) et qui sont maintenus par un porte-satellites (100), chaque satellite (80) ayant un axe (Y) de rotation et comportant une première denture (82) de diamètre moyen (D1) pour l'engrènement avec le solaire (70), et une seconde denture (84) de diamètre moyen (D2), différent du diamètre moyen (D1) de la première denture (82), pour l'engrènement avec la couronne (90),
la seconde denture (84) comportant une série de dents amont (84d1) et une série de dents aval (84d2) situées de part et d'autre dudit plan (H) et séparées l'une de l'autre par ladite première denture (82),
chacun des satellites (80) étant centré et guidé en rotation autour de son axe (Y) vis-à-vis du porte-satellites (100) par des paliers (94a, 94b) situés de part et d'autre dudit plan (H),
**caractérisé en ce que** la première denture (82) comporte une série de dents amont (82d1) et une série de dents aval (82d2) qui sont situées de part et d'autre d'un plan (H) perpendiculaire à l'axe (X) de rotation du solaire (70) et passant sensiblement au milieu du satellite (80),
et **en ce que** lesdits paliers (94a, 94b) sont situés de part et d'autre dudit plan (H), un palier amont (94a) étant intercalé axialement entre la série de dents amont (84d1) de la seconde denture (84) et ledit plan (H), et un palier aval (94b) étant intercalé axialement entre la série de dents aval (84d2) de la seconde denture (84) et ledit plan (H).

2. Réducteur mécanique (160) selon la revendication précédente, dans lequel chacun des satellites (80) comprend un corps cylindrique (86) et une paroi annulaire (91) entourant à distance ce corps et reliée à ce dernier par un voile annulaire de matière (88) s'étendant dans le plan (H) précité, les séries de dents (84d1, 84d2) de la seconde denture (84) étant situées sur des portions d'extrémité dudit corps (86) et les séries de dents (82d1, 82d2) de la première denture (82) étant situées sur la paroi (91), cette paroi définissant, de part et d'autre du voile (88) et dudit plan (H), des espaces annulaires (E1, E2) dans lesquels sont au moins partiellement logés les paliers amont (94a) et aval (94b).

3. Réducteur mécanique (160) selon la revendication précédente, dans lequel le porte-satellites (100) comprend deux rebords cylindriques, respectivement amont (100a) et aval (100b), situés de part et d'autre dudit plan (H), ces rebords cylindriques (100a, 100b) étant logés dans lesdits espaces annulaires (E1, E2) et servant de support auxdits paliers amont (94a) et aval (94b).

4. Réducteur mécanique (160) selon l'une des revendications précédentes, dans lequel lesdits paliers amont et aval (94a, 94b) sont des paliers à roulement.

5. Réducteur mécanique (160) selon la revendication précédente, dans lequel chacun des paliers à roulement amont (94a) et aval (94b) comprend une bague (99, 103) ou une piste (96) de roulement interne qui est :
- rapportée sur le satellite (80), ou
- formée d'une seule pièce avec le satellite (80), ou
- rapportée sur le porte-satellites (100), ou
- formée d'une seule pièce avec le porte-satellites (100).

6. Réducteur mécanique (160) selon la revendication 4 ou 5, dans lequel chacun des paliers à roulement amont (94a) et aval (94b) comprend une bague ou une piste (98, 105) de roulement externe qui est :
- rapportée sur le satellite (80), ou
- formée d'une seule pièce avec le satellite (80), ou
- rapportée sur le porte-satellites (100), ou
- formée d'une seule pièce avec le porte-satellites (100).

7. Réducteur mécanique (160) selon la revendication précédente, en dépendance de la revendication 2 ou 3, dans lequel la bague ou la piste (105) de roulement externe de chacun des paliers (94a, 94b) est rapportée ou formée d'une seule pièce avec ladite paroi (91).

8. Réducteur mécanique (160) selon l'une des revendications précédentes, dans lequel les paliers amont (94a) et aval (94b) ont des diamètres (D3) identiques qui sont inférieurs au diamètre (D1) de la première denture (82) et supérieurs au diamètre (D2) de la second denture (84).

9. Réducteur mécanique (160) selon l'une des revendications précédentes, dans lequel le porte-satellites (100) a une dimension axiale (L) qui représente entre 20 et 80% de la dimension axiale des satellites (80).

10. Réducteur mécanique (160) selon l'une des revendications précédentes, dans lequel la première denture (82) est à dents en chevron et la seconde denture (84) est à dents en chevron ou à dents droites.

11. Réducteur mécanique (160) selon l'une des revendications précédentes, dans lequel il est inscrit dans une enveloppe ayant une forme générale biconique, le réducteur présentant une plus grande dimension transversale au niveau dudit plan (H).

12. Turbomachine (1), en particulier d'aéronef, comportant un réducteur mécanique (160) selon l'une des revendications précédentes.

## Patentansprüche

1. Mechanisches Untersetzungsgetriebe (160) einer Turbomaschine (1), insbesondere eines Luftfahrzeugs, wobei dieses Untersetzungsgetriebe umfasst:
- ein Sonnenrad (70) mit einer Drehachse (X),
- eine Krone (90), die sich um das Sonnenrad (70) erstreckt,
- Planetenräder (80), die mit dem Sonnenrad (70) und dem Hohlrad (90) in Eingriff stehen und die von einem Planetenträger (100) gehalten werden, wobei jedes Planetenrad (80) eine Drehachse (Y) hat und eine erste Verzahnung (82) mit einem mittleren Durchmesser (D1) für den Eingriff mit dem Sonnenrad (70) und eine zweite Verzahnung (84) mit einem mittleren Durchmesser (D2), der sich vom mittleren Durchmesser (D1) der ersten Verzahnung (82) unterscheidet, für den Eingriff mit dem Hohlrad (90) umfasst,
wobei die zweite Verzahnung (84) eine Reihe vorgelagerter Zähne (84d1) und eine Reihe nachgelagerter Zähne (84d2) umfasst, die sich zu beiden Seiten der Ebene (H) befinden und durch die erste Verzahnung (82) voneinander getrennt sind,
wobei jedes der Planetenräder (80) zentriert ist und durch Lager (94a, 94b), die sich zu beiden Seiten der Ebene (H) befinden, in der Drehung um seine Achse (Y) gegenüber dem Planetenträger (100) geführt wird,
**dadurch gekennzeichnet, dass** die erste Verzahnung (82) eine Reihe vorgelagerter Zähne (82d1) und eine Reihe nachgelagerter Zähne (82d2) umfasst, die sich zu beiden Seiten einer Ebene (H) befinden, welche senkrecht zur Drehachse (X) des Sonnenrads (70) verläuft und im Wesentlichen durch die Mitte des Planetenrads (80) verläuft,
und dass sich die Lager (94a, 94b) zu beiden Seiten der Ebene (H) befinden, wobei ein vorgelagertes Lager (94a) axial zwischen der Reihe vorgelagerter Zähne (84d1) der zweiten Verzahnung (84) und der Ebene (H) eingefügt ist und ein nachgelagertes Lager (94b) axial zwischen der Reihe nachgelagerter Zähne (84d2) der zweiten Verzahnung (84) und der Ebene (H) eingefügt ist.

2. Mechanisches Untersetzungsgetriebe (160) nach dem vorstehenden Anspruch, wobei jedes der Planetenräder (80) einen zylindrischen Körper (86) und eine ringförmige Wand (91) umfasst, die diesen Körper in einem Abstand umgibt und mit diesem durch einen ringförmigen Steg aus Material (88) verbunden ist, der sich in der vorgenannten Ebene (H) erstreckt, wobei die Reihen von Zähnen (84d1, 84d2) der zweiten Verzahnung (84) an Endabschnitten des Körpers (86) und die Reihen von Zähnen (82d1, 82d2) der ersten Verzahnung (82) an der Wand (91) angeordnet sind, wobei diese Wand zu beiden Seiten des Stegs (88) und der Ebene (H) ringförmige Räume (E1, E2) definiert, in denen das vorgelagerte (94a) und das nachgelagerte (94b) Lager zumindest teilweise untergebracht sind.

3. Mechanisches Untersetzungsgetriebe (160) nach dem vorstehenden Anspruch, wobei der Planetenträger (100) zwei zylindrische Ränder, jeweils vorgelagert (100a) und nachgelagert (100b), umfasst, die sich zu beiden Seiten der Ebene (H) befinden, wobei diese zylindrischen Ränder (100a, 100b) in den ringförmigen Räumen (E1, E2) untergebracht sind und dem vorgelagerten (94a) und nachgelagerten Lager (94b) als Träger dienen.

4. Mechanisches Untersetzungsgetriebe (160) nach einem der vorstehenden Ansprüche, wobei das vorgelagerte und das nachgelagerte Lager (94a, 94b) Wälzlager sind.

5. Mechanisches Untersetzungsgetriebe (160) nach dem vorstehenden Anspruch, wobei jedes der vorgelagerten (94a) und nachgelagerten (94b) Wälzlager einen inneren Laufring (99, 103) oder eine innere Lageraufbahn (96) umfasst, die:
- auf das Planetenrad (80) aufgesetzt ist oder
- einstückig mit dem Planetenrad (80) ausgebildet ist oder
- auf den Planetenträger (100) aufgesetzt ist oder
- einstückig mit dem Planetenträger (100) ausgebildet ist.

6. Mechanisches Untersetzungsgetriebe (160) nach Anspruch 4 oder 5, wobei jedes der vorgelagerten (94a) und nachgelagerten (94b) Wälzlager einen äußeren Laufring oder eine äußere Lagerlaufbahn (98, 105) umfasst, die:
- auf das Planetenrad (80) aufgesetzt ist oder
- einstückig mit dem Planetenrad (80) ausgebildet ist oder
- auf den Planetenträger (100) aufgesetzt ist oder
- einstückig mit dem Planetenträger (100) ausgebildet ist.

7. Mechanisches Untersetzungsgetriebe (160) nach dem vorstehenden Anspruch, in Abhängigkeit von Anspruch 2 oder 3, wobei der äußere Laufring oder die äußere Lagerlaufbahn (105) jedes der Lager (94a, 94b) auf die Wand (91) aufgesetzt oder einstückig mit dieser ausgebildet ist.

8. Mechanisches Untersetzungsgetriebe (160) nach einem der vorstehenden Ansprüche, wobei das vorgelagerte (94a) und das nachgelagerte (94b) Lager identische Durchmesser (D3) aufweisen, die kleiner sind als der Durchmesser (D1) der ersten Verzahnung (82) und größer sind als der Durchmesser (D2) der zweiten Verzahnung (84).

9. Mechanisches Untersetzungsgetriebe (160) nach einem der vorstehenden Ansprüche, wobei der Planetenträger (100) eine axiale Abmessung (L) aufweist, die zwischen 20 und 80% der axialen Abmessung der Planetenräder (80) darstellt.

10. Mechanisches Untersetzungsgetriebe (160) nach einem der vorstehenden Ansprüche, wobei die erste Verzahnung (82) pfeilgezahnt ist und die zweite Verzahnung (84) pfeilgezahnt oder mit geraden Zähnen versehen ist.

11. Mechanisches Untersetzungsgetriebe (160) nach einem der vorstehenden Ansprüche, wobei es in eine Umhüllung mit einer im Allgemeinen doppelkonischen Form eingebettet ist, wobei das Untersetzungsgetriebe an der Ebene (H) eine größere Querschnittsgröße aufweist.

12. Turbomaschine (1), insbesondere eines Luftfahrzeugs, mit einem mechanischen Untersetzungsgetriebe (160) nach einem der vorstehenden Ansprüche.

## Claims

1. A mechanical reduction gear (160) for a turbomachine (1), in particular for aircraft, this reduction gear comprising:
- a sun gear (70) having an axis (X) of rotation,
- a ring gear (90) which extends around the sun gear (70),
- planet gears (80) which are meshed with the sun gear (70) and the ring gear (90) and which are held by a planet carrier (100), each planet gear (80) having an axis (Y) of rotation and comprising a first toothing (82) with a mean diameter (D1) for the meshing with the sun gear (70), and a second toothing (84) with a mean diameter (D2), which is different from the mean diameter (D1) of the first toothing (82), for the meshing with the ring gear (90),
the second toothing (84) comprising a series of upstream teeth (84d1) and a series of downstream teeth (84d2) located on either side of said plane (H) and separated from each other by said first toothing (82),
each of the planet gears (80) being centred and guided in rotation about its axis (Y) with respect to the planet carrier (100) by bearings (94a, 94b) located on either side of said plane (H),
**characterised in that** the first toothing (82) comprising a series of upstream teeth (82d1) and a series of downstream teeth (82d2) which are located on either side of a plane (H) perpendicular to the axis (X) of rotation of the sun gear (70) and passing substantially through the middle of the planet gear (80),
and **in that** said bearings (94a, 94b) are located on either side of said plane (H), an upstream bearing (94a) being interposed axially between the series of upstream teeth (84d1) of the second toothing (84) and said plane (H), and a downstream bearing (94b) being interposed axially between the series of downstream teeth (84d2) of the second toothing (84) and said plane (H).

2. The mechanical reduction gear (160) according to the preceding claim, wherein each of the planet gears (80) comprises a cylindrical body (86) and an annular wall (91) surrounding this body at a distance and connected to the latter by an annular web (88) of material extending in the aforementioned plane (H), the series of teeth (84d1, 84d2) of the second toothing (84) being located on end portions of said body (86) and the series of teeth (82d1, 82d2) of the first toothing (82) being located on the wall (91), this wall defining, on either side of the web (88) and said plane (H), annular spaces (E1, E2) in which the upstream (94a) and downstream (94b) bearings are at least partially housed.

3. The mechanical reduction gear (160) according to the preceding claim, wherein the planet carrier (100) comprises two cylindrical edges, respectively upstream (100a) and downstream (100b), located on either side of said plane (H), these cylindrical edges (100a, 100b) being housed in said annular spaces (E1, E2) and used to support said upstream (94a) and downstream (94b) bearings.

4. The mechanical reduction gear (160) according to any of the preceding claims, wherein said upstream and downstream bearings (94a, 94b) are rolling bearings.

5. The mechanical reduction gear (160) according to the preceding claim, wherein each of the upstream (94a) and downstream (94b) rolling bearings comprises an inner rolling ring (99,103) or an inner rolling track (96) which is:
- fitted to the planet gear (80), or
- formed in one piece with the planet gear (80), or
- fitted to the planet carrier (100), or
- formed in one piece with the planet carrier (100).

6. The mechanical reduction gear (160) according to claim 4 or 5, wherein each of the upstream (94a) and downstream (94b) rolling bearings comprises an outer rolling ring or an outer rolling track (98, 105) which is:
- fitted to the planet gear (80), or
- formed in one piece with the planet gear (80), or
- fitted to the planet carrier (100), or
- formed in one piece with the planet carrier (100).

7. The mechanical reduction gear (160) according to the preceding claim, in dependence on claim 2 or 3, wherein the outer rolling ring or the outer rolling track (105) of each of the bearings (94a, 94b) is fitted to or formed in one piece with said wall (91).

8. The mechanical reduction gear (160) according to any of the preceding claims, wherein the upstream (94a) and downstream (94b) bearings have identical diameters (D3) which are smaller than the diameter (D1) of the first toothing (82) and larger than the diameter (D2) of the second toothing (84).

9. The mechanical reduction gear (160) according to any of the preceding claims, wherein the planet carrier (100) has an axial dimension (L) which is between 20 and 80% of the axial dimension of the planet gears (80).

10. The mechanical reduction gear (160) according to any of the preceding claims, wherein the first toothing (82) is herringbone-toothed and the second toothing (84) is herringbone-toothed or straight-toothed.

11. The mechanical reduction gear (160) according to any of the preceding claims, wherein it is placed in a shell having a generally biconical shape, the reduction gear having a larger transverse dimension at said plane (H).

12. Aturbomachine (1), in particular for aircraft, comprising a mechanical reduction gear (160) according to one of the preceding claims.
